# EUROPEAN PATENT SPECIFICATION

(11) **EP 0 964 240 B1**
(45) Date of publication and mention of the grant of the patent: **30.07.2003**
(21) Application number: 99401128.6
(22) Date of filing: 07.05.1999
(51) Int. Cl.: G01N 1/24, C12M 1/26

(54) **Sampling apparatus for the microbiological analysis of air**
Probeentnahmevorrichtung zur mikrobiologischen Analyse von Luft
Appareil de prélèvement pour l'analyse microbiologique de l'air

(30) Priority: 10.06.1998 FR 9807299
(43) Date of publication of application: 15.12.1999
(73) Proprietor: MILLIPORE, 67120 Molsheim (FR)
(72) Inventor: Lemonnier, Jean, 75006 Paris (FR)
(74) Representative: Santarelli

(56) References cited:
- FR-A- 2 732 692
- GB-A- 2 224 118
- US-A- 3 922 905

## Description

The invention relates to the microbiological analysis of air.

It is known that, in order to effect such an analysis, use is generally made of a sampling apparatus for depositing micro-organisms, such as bacteria, yeasts or moulds, present in an air sample, on a layer of gel growth medium in a receptacle, and that next this receptacle is put to incubate at the required temperature and for the required length of time to enable the deposited micro-organisms to develop in the form of colonies visible to the naked eye, so that they can be counted and identified.

The invention aims to make it possible to perform the operation of depositing micro-organisms on the layer of gel growth medium both rapidly and under conditions such that the colonies which are visible after incubation faithfully reflect the micro-organism population of the sample being checked.

To this end it proposes a sampling apparatus for the microbiological analysis of air, having a sieve with a wall perforated with a multitude of holes, means for holding a removable receptacle containing a layer of gel growth medium with a contour similar to that of the said perforated wall in a predetermined position in which the said layer of gel growth medium is disposed opposite the said perforated wall and concentrically with it, and means for sucking air at the periphery of the said receptacle held in the said predetermined position, in order to cause to enter the said apparatus, through the said holes, air which strikes the said layer of gel growth medium (such an apparatus is known from GB-A-2 224 118 or US-A-3 922 905); characterised in that the said perforated wall of the sieve and the said layer of gel growth medium in the receptacle are shaped so that their separation increases from their periphery to their centre.

This increase in separation enables the air to enter the apparatus more uniformly, and therefore more usefully, in particular in the central area of the perforated wall.

As a matter of fact, whereas in the prior apparatus where the perforated wall and the layer of gel growth medium are parallel, the ratio between a surface of radius r of the perforated wall and the peripheral section through which the air which has entered through this surface can be discharged, varies exactly with the radius r (the ratio is equal to er/2 where e is the constant separation between the layer of gel growth medium and the perforated wall), in the apparatus according to the invention, the increase in separation from the periphery towards the centre makes it possible to have a cross section of flow of air which is everywhere sufficiently great with respect to the surface through which the air has entered in order to afford correct discharge of the air, including in the central area of the perforated wall.

In addition, the increase in separation from the periphery to the centre has the effect that the air jets created by the perforated wall have to travel, between the latter and the gel growth medium, a distance which is the greater, the smaller the volume of air to be discharged, and is therefore the greater, the easier it is for the air jets to reach the gel growth medium across the air flow currently being discharged towards the periphery of the receptacle.

The increase in separation thus makes it possible to provide, in the perforated wall, a large number of holes capable of being useful, that is to say holes through which an air flow can be established, coming to strike the gel growth medium in the form of a jet having a speed which is sufficiently high for any micro-organism present in the air flow to be fixed to the layer of gel growth medium by impaction and sufficiently low for the micro-organism to remain revivable.

By virtue of this possibility of disposing a large number of useful holes in the perforated wall, for example 1000 useful holes whilst in the prior apparatus the perforated wall of the sieve has at a maximum 400 holes, the micro-organisms can be deposited on the layer of gel growth medium under conditions which are more favourable to accuracy of the analysis, and the sample can be taken more rapidly.

This is because a higher number of useful holes makes it possible to have a greater total surface through which the air enters through the perforated wall, and consequently to have a higher sampling rate (for example 140 to 180 l/min, which makes it possible to sample 1 m³ in less than 7 minutes) whilst the speed at which the air jets strike the layer of gel growth medium is similar to that of the prior apparatus, that is to say it remains within limits enabling the jets to be useful.

The conditions of deposition of the micro-organisms are more favourable since having more useful holes on the one hand enables the gel growth medium to retain more micro-organisms and on the other hand avoids having several micro-organisms being impacted at the same place on the layer of gel growth medium, which would give rise to a false assessment of the microbiological population present in the air sample since the colonies of the respective micro-organisms impacted at the same point would overlap and would then be counted as the colony of a single micro-organism.

The gel growth medium is capable of retaining more micro-organisms since the volume of air passing through each hole is smaller (on average, 1 litre per hole with 1000 holes instead of 2.5 litres per hole with 400 holes for a sample of 1 m³ of air) so that each area of the gel growth medium struck by an air jet (an area where a small crater forms on the gel growth medium) is less dried by the air flow, and therefore retains better adhesion and hardness properties, and consequently better capability of retaining the micro-organisms over the sampling period.

The reduction in risk of overlapping of the colonies is achieved by virtue of this decrease in the volume passing through each hole, since the lower the volume of air brought in by a jet striking the gel growth medium, the lower the risk that there will be several micro-organisms in this volume, and is also achieved by virtue of the uniformity of exposure of the gel growth medium to the sample air, that is to say to the fact that approximately the same flow rate, and therefore the same volume of air, is caused to pass through each hole, which avoids certain areas of the gel growth medium being struck by a higher volume of sample air than other areas, and therefore they have a higher risk of receiving several micro-organisms at the same place (in the same crater).

According to preferred features, the said perforated wall of the sieve is concave on the side which faces the said layer of gel growth medium whilst the latter is flat on the side which faces the perforated wall of the sieve.

The variation in separation between the layer of gel growth medium and the perforated wall is thus particularly simple to implement with greater precision, favourable to the reproducibility of the measurements.

Preferably, the said perforated wall of the sieve is in the form of a spherical cap.

The tests carried out by the inventor in fact showed that excellent results could be obtained with such a shape in a portion of a sphere.

According to other preferred features, the said holes in the perforated wall are solely disposed in concentric circles as well as, for a plurality of said circles, consecutive as from the centre, in a plurality of identical series of substantially parallel chevrons, whose apex is turned towards the centre, each said series of chevrons being delimited externally by a chevron formed by two radii.

The perforated wall is thus subdivided into a certain number of identical circular sectors having, between the alignments of holes, channels discharging air towards the periphery, the number of these channels increasing from the centre towards the periphery of the perforated wall.

Thus, at least in the central region of the perforated wall, the coexistence between the air entering the apparatus in the form of jets and the air being discharged peripherally takes place with a minimum of mutual interference, the air jets forming kinds of columns aligned in rows delimiting paths for the discharge of air to the periphery without obstacle, the air in particular being able to circulate in these paths without having to pass round air jets situated in the middle of a path, which is favourable to a correct discharge of the air.

It will be noted that this arrangement of the holes in the perforated wall by itself makes it possible to provide a large number of useful holes in the perforated wall, and can therefore be envisaged with a separation between the layer of gel growth medium and the perforated wall which does not increase as disclosed above.

Preferably, for each circle of the said plurality of circles, the n^{th} circle from the centre has sn holes, s being the number of identical series of chevrons.

If for example there are six identical series of chevrons, the first circle from the centre has six holes, the second circle twelve holes, and so on, whilst for each series of chevrons the outermost chevron is formed by two radii, the following consecutive chevron is parallel to these radii and has its apex on the second circle, the second chevron has its apex on the fourth circle, and so on.

With these features, excellent uniformity of distribution of the holes on the perforated walls is obtained.

Preferably, the said plurality of identical series of chevrons is formed by six said series.

This figure constitutes an excellent compromise where the number of holes and the number of paths discharging air to the periphery is balanced.

Preferably, as from the (p+1)^{th} consecutive circle as from the centre, each circle has the same number of holes as the p^{th} circle and each of its holes is aligned, on a radius, with a respective hole of the p^{th} circle, p being the number of circles in the said plurality of consecutive circles.

Thus, as from the (p+1)^{th} circle, the peripheral air discharge channels are extended simply in a radial orientation, without new channels being created.

The number of holes remains the same from one circle to another but, as these circles are in the peripheral area of the perforated wall, the lack of uniformity in the number of holes per unit surface area which results therefrom remains low and in practice has little consequence on the conditions of deposition of the micro-organisms, whilst manufacture of the sieve is thereby simplified.

Preferably, having regard to the experiments carried out by the inventor, the said plurality of consecutive circles is formed by fourteen said circles.

Preferably, still for practical reasons of manufacture and quality of the results obtained:
- the said concentric circles on which the said holes in the said perforated wall are disposed are substantially equidistant; and/or
- the distance between two consecutive circles of the said concentric circles on which the said holes in the said perforated wall are disposed is between 1.8 and 2.2 mm.

According to other features preferred for the same reasons:
- the holes in the said perforated wall in the sieve all have substantially the same size; and/or
- the holes in the said perforated wall in the sieve all have a diameter of between 0.4 and 0.6 mm; and/or
- the number of holes per unit surface area of the said perforated wall is substantially uniform; and/or
- the number of holes per cm² in the said perforated wall is between 20 and 30; and/or
- the number of holes in the said perforated wall is between 800 and 1200.

The disclosure of the invention will now be continued with a description of an example embodiment given below for illustration and non-limitatively, with reference to the accompanying drawings. In these :
- Figure 1 is a perspective view of an apparatus according to the invention;
- Figure 2 is a view thereof in elevation and section;
- Figure 3 is a plan view of the sieve included in this apparatus; and
- Figure 4 is a graph showing the variation in the mean speed at which the air strikes the layer of gel growth medium as a function of the volume of air sucked in.

The apparatus 1 illustrated has a sampling head 2 and a body 3.

The sampling head 2 has a sieve 4, an aerodynamic sleeve 5 on the end of which the sieve 4 is removably mounted, a deflector 6 disposed in the sleeve 5 so that there is an air suction duct 7 between the deflector and the sleeve, and a turbine 8 having a stator 9 fixed to the sleeve 5 and a rotor 10 for sucking air into the duct 7 and for discharging it through the side discharge orifice 9'.

The rotor 10 of the turbine 8 is driven by an electric motor 11, which partially enters the body 3.

The latter serves in general terms to hold the apparatus 1 and to control the motor 11 : the body 3 has externally, opposite the head 2, feet 12 by means of which the apparatus 1 can be placed vertically, a base 13 having a threaded hole for fixing the apparatus 1, for example horizontally, to a support such as a conventional camera tripod, and a handle 14 for gripping the apparatus 1, the body 3 containing a set of electrical batteries 15, an electrical circuit 16 having a display 17 and a simplified keypad 18 disposed above the handle 14 as well as another electrical circuit 19, and a certain number of electrical conductors, not shown, serving to effect the necessary connections between the motor 11, the battery 15 and the circuits 16 and 19.

The sampling head 2 is designed to receive a receptacle 20 containing a layer of gel growth medium 21 with a similar contour to that of the perforated wall 22 of the sieve 4, and to hold this receptacle in the illustrated position in which the layer of gel growth medium is disposed opposite the perforated wall 22 and concentrically with it.

The receptacle 20 is more precisely held by virtue of notches (not illustrated) provided on the end of the aerodynamic sleeve 5, notches in each of which there is housed one of the lugs (not illustrated) which the receptacle 20 has projecting with respect to its lateral wall, the fitting of the base of the receptacle 20 (the part of the receptacle opposite to the surface of the layer of gel growth medium which faces the perforated wall 22) in the deflector 6 serving to close off the latter. More details on the cooperation between the receptacle 20 and the sampling head 2 are given in the French patent FR 2 777 904, to which reference can be made if desired.

It should be noted simply that the fact that the receptacle 20 and the sieve 4 are both mounted on the same support (the end of the sleeve 5) makes it possible to have a very precise positioning of the sieve with respect to the receptacle, and that the surface of the layer of gel growth medium 21 which is opposite the perforated wall 22 is delimited at the time of manufacture (when the layer of gel growth medium 21 is poured) by a film tensioned over the end surface of the annular wall which surrounds the layer of gel growth medium 21, so that the geometry of this surface is particularly precise and repetitive from one receptacle 20 to another.

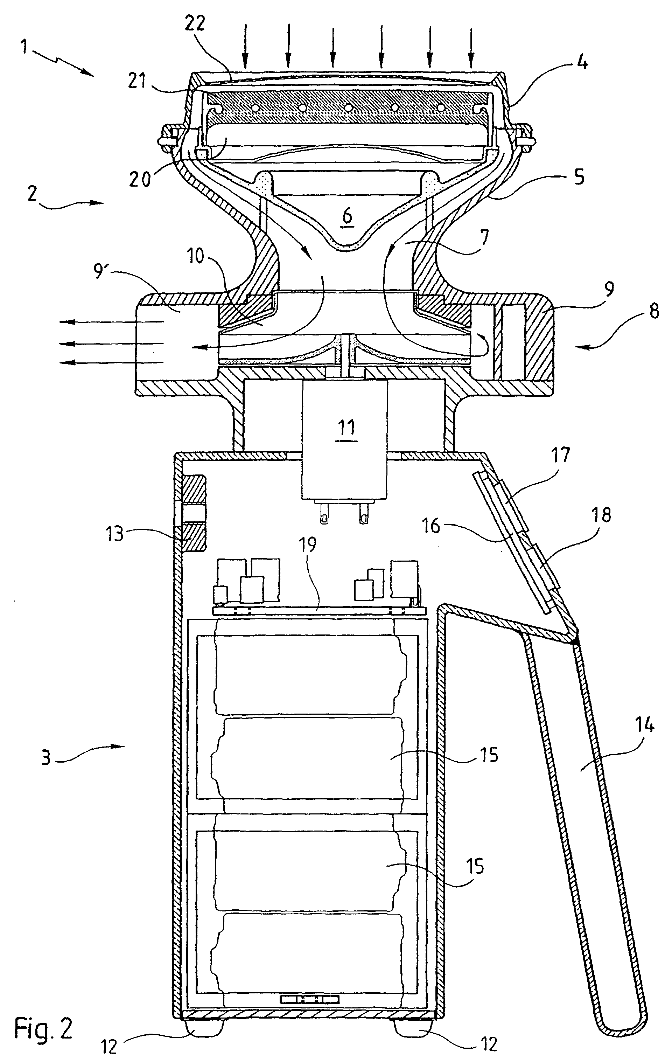

Because of the conformation of the side wall of the receptacle 20 and that of the sieve 4, the duct 7 also exists all around the receptacle 20 so that, when the rotor 10 rotates, there is a suction of air at the periphery of the receptacle 20 and therefore a suction of external air which enters the apparatus 1 though the multitude of holes in the perforated wall 20, as shown by the arrows in Figure 2.

Whereas the surface of the layer of gel growth medium 21 which faces the wall 22 is flat (it is very slightly curved because the film delimiting this surface at the time of manufacture adopts a small deflection when the gel growth medium is poured), the wall 22 is curved in the direction in which it is concave on the side which faces the layer of gel growth medium 21, here in a portion of a sphere, so that the separation between the wall 22 and the layer of gel growth medium 21 increases from their periphery towards their centre.

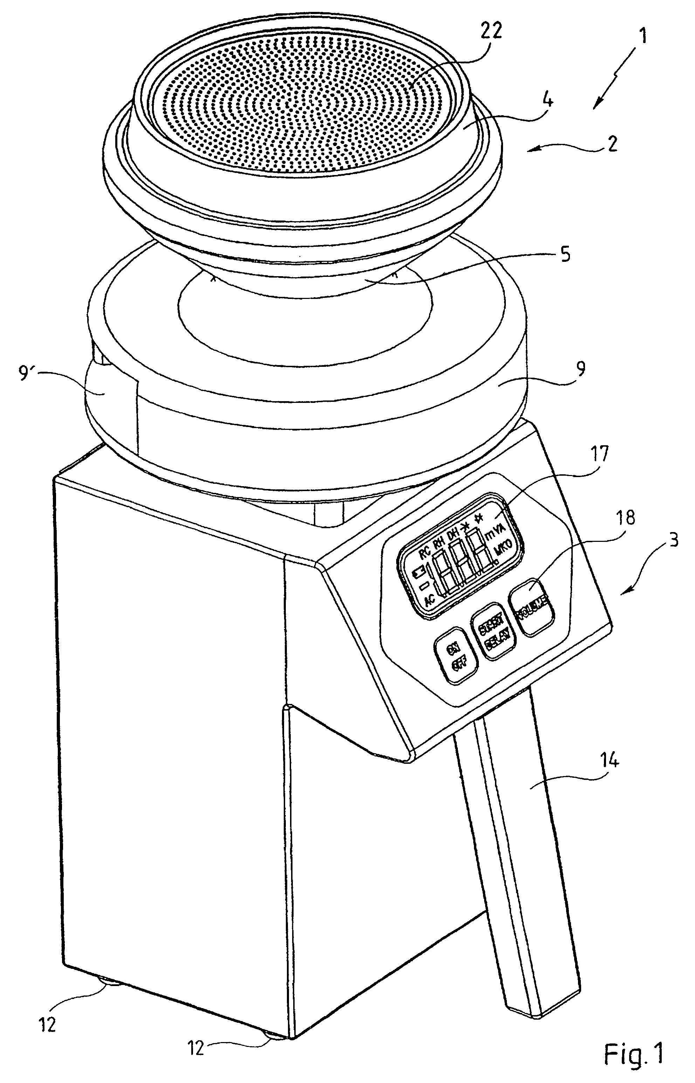

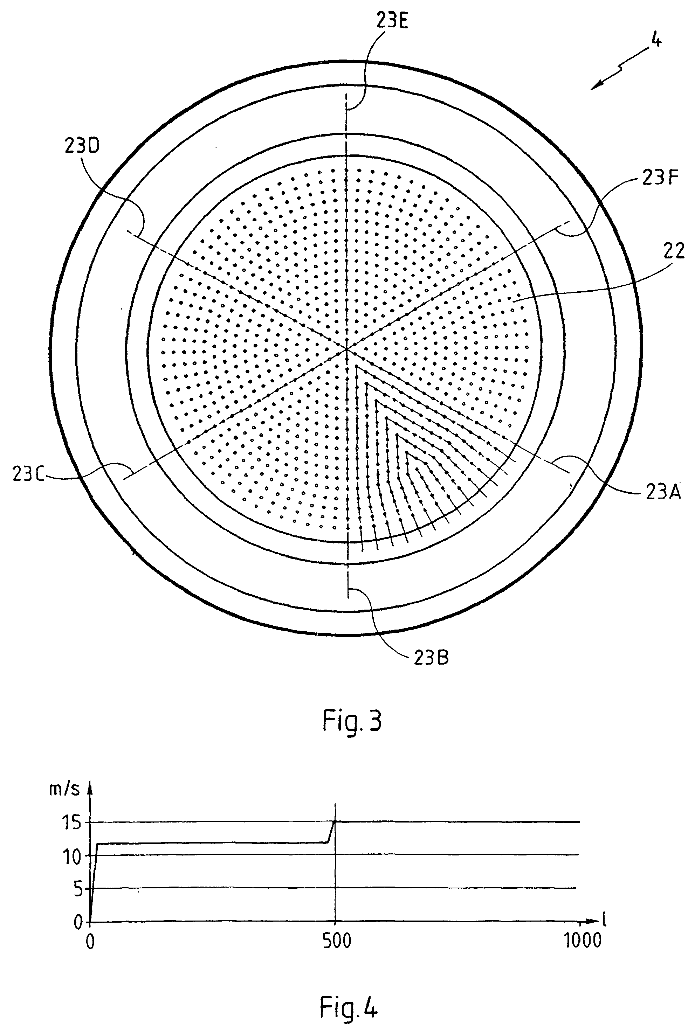

By virtue of this variable separation, the holes provided in the wall 22, which are particularly high in number as can be seen in Figures 1 and 3, are all capable of being useful, that is to say of each creating a flow of air coming to strike the layer of gel growth medium 21 in the form of a jet which encounters the latter at a sufficiently high speed for any micro-organism present in the flow of air to be fixed on the layer of gel growth medium by impaction and sufficiently low for the micro-organism to remain revivable.

As can be seen more particularly in Figure 3, the holes in the perforated wall 22 are solely disposed in concentric circles as well as in six circular sectors delimited by the radii 23A to 23F, which are disposed at 60° to each other.

The holes in the first fourteen consecutive circles as from the centre of each of the six sectors are disposed in a series of parallel chevrons whose apex is turned towards the centre, so that there are six identical series of chevrons which are externally delimited respectively by the chevron formed by the radii 23A and 23B, by that formed by the radii 23B and 23C and so on.

As a result, for each series of chevrons, the apex of the one which is furthest towards the outside is situated on the hole which is exactly at the centre of the perforated wall 22, the apex of the second chevron is on a hole in the second circle, and so on until the seventh and last chevron, whose apex is on the twelfth consecutive circle from the centre.

From the fifteenth to the eighteenth and last circle, the number of holes remains the same as for the fourteenth circle, each of the holes in these circles being aligned on a radius, with a respective hole in the fourteenth circle.

As can be seen in Figure 3 for the sector situated between the radii 23A and 23B, where all the alignments of holes have been depicted, there are channels between these alignments, going as far as the periphery of the wall 22, the number of the channels being higher as the periphery of this wall is approached.

When the rotor 10 is driven in rotation, the jets of air existing between the wall 22 and the layer of gel growth medium 21 are disposed in the same way as the holes in this wall, and there therefore exist, between the alignments of air jets, paths (corresponding to the above mentioned channels) by virtue of which the air can be discharged without obstacle to the peripheral suction channel 7, so that coexistence between the air entering the apparatus in the form of jets and that discharging at the periphery is achieved with a minimum degree of mutual interference.

It will be observed that the concentric circles in which the holes in the wall 22 are disposed are substantially equidistant, and it will be noted that this distance is around 2 mm, that the holes in the wall 22 all have substantially the same size, here a diameter of around 0.5 mm, that the number of holes per unit surface area of the perforated wall is substantially uniform, here around 25 holes per cm², and that the total number of holes in the wall 22 is slightly less than 1000 holes.

Because the separation between the layer of gel growth medium 21 and the perforated wall 22 has geometric characteristics which are repeated from one receptacle 20 to another, the air flow sucked in for each rotation of the rotor 10 remains the same and consequently the speed at which the air strikes the layer of gel growth medium 21 remains the same for the same speed of rotation of the rotor, and the volume of air sucked in remains the same for the same number of rotations effected by the rotor.

Figure 4 shows how the mean speed at which the layer of gel growth medium 21 is struck by the air jets is varied according to the volume already sucked in, that is to say here how the circuits 16 and 19 vary the speed of rotation of the motor 11 as a function of the number of rotations already effected by the latter.

At the start, the speed of rotation of the motor 11 is fixed so that the mean speed of the air through the holes in the wall 22 (the ratio between the total flow rate and the total surface area of the holes) is around 11.5 m/s and this speed is maintained constant until a volume of approximately 500 litres has been sucked in, and the speed of rotation of the motor is then increased so that the mean speed is 15 m/s and this speed of rotation is maintained until the whole of the sample, that is to say 1000 litres (1 m³), has been sucked in.

This variation in the speed of impaction on the gel growth medium as a function of the volume already sucked in reduces the risk that the micro-organisms may not be retained by the layer of gel growth medium because the latter undergoes a certain degree of drying as the sample is taken at each place where the gel growth medium is struck by an air jet, the increase in speed compensating for the increase in hardness and the reduction in adhesion due to the drying.

In a variant which is not shown, the air suction rate (and therefore the mean speed at which the gel growth medium is struck) is increased progressively rather than in stages or with more than two stages; the holes are distributed differently on the perforated wall 22, notably by providing a different number of concentric circles and radii delimiting sectors where the holes are distributed identically; and/or the increase in separation between the layer of gel growth medium and the perforated wall is achieved differently, for example with a perforated wall which is flat and a layer of gel growth medium which is concave on the side which faces the perforated wall.

Numerous other variants are possible according to circumstances, and it should be stated in this regard that the invention is not limited to the examples described and depicted.

## Claims

1. Sampling apparatus (1) for the microbiological analysis of air, having a sieve (4) with a wall (22) perforated with a multitude of holes, means for holding a removable receptacle (20) containing a layer of gel growth medium (21) with a contour similar to that of the said perforated wall (22) in a predetermined position in which the said layer of gel growth medium (21) is disposed opposite the said perforated wall (22) and concentrically with it, and means for sucking air at the periphery of the said receptacle (20) held in the said predetermined position, in order to cause to enter the said apparatus (1), through the said holes, air which strikes the said layer of gel growth medium (21); **characterised in that** the said perforated wall (22) of the sieve (4) and the said layer of gel growth medium (21) in the receptacle (20) are shaped so that their separation increases from their periphery to their centre.

2. Apparatus according to Claim 1, **characterised in that** the said perforated wall (22) of the sieve (4) is concave on the side which faces the said layer of gel growth medium (21) whilst the latter is flat on the side which faces the perforated wall (22) of the sieve (4).

3. Apparatus according to either one of Claims 1 or 2, **characterised in that** the said perforated wall (22) of the sieve (4) is in the form of a spherical cap.

4. Apparatus according to any one of Claims 1 to 3, **characterised in that** the said holes in the said perforated wall (22) are solely disposed in circles which are concentric and, for a plurality of said circles, consecutive as from the centre, in a plurality of identical series of substantially parallel chevrons whose apex is turned towards the centre, each said series of chevrons being delimited externally by a chevron formed by two radii (23A-23F).

5. Apparatus according to Claim 4, **characterised in that**, for each circle in the said plurality of circles, the n^{th} circle as from the centre has sn holes, s being the number of identical series of chevrons.

6. Apparatus according to either one of Claims 4 or 5, **characterised in that** the said plurality of identical series of chevrons is formed by six said series.

7. Apparatus according to any one of Claims 4 to 6, **characterised in that**, as from the (p+1)^{th} consecutive circle as from the centre, each circle has the same number of holes as the p^{th} circle and each of its holes is aligned, on a radius, with a respective hole of the p^{th} circle, p being the number of circles in the said plurality of consecutive circles.

8. Apparatus according to any one of Claims 4 to 7, **characterised in that** the said plurality of consecutive circles is formed by fourteen said circles.

9. Apparatus according to any one of Claims 4 to 8, **characterised in that** the said concentric circles on which the said holes in the said perforated wall are disposed are substantially equidistant.

10. Apparatus according to any one of Claims 4 to 9, **characterised in that**,the distance between two consecutive circles of the said concentric circles on which the said holes in the said perforated wall (22) are disposed is between 1.8 and 2.2 mm.

11. Apparatus according to any one of Claims 1 to 10, **characterised in that** the holes in the said perforated wall (22) of the sieve (4) all have substantially the same size.

12. Apparatus according to any one of Claims 1 to 11, **characterised in that** the holes in the said perforated wall (22) of the sieve (4) all have a diameter of between 0.4 and 0.6 mm.

13. Apparatus according to any one of Claims 1 to 12, **characterised in that** the number of holes per unit surface area of the said perforated wall (22) is substantially uniform.

14. Apparatus according to any one of Claims 1 to 13, **characterised in that** the number of holes per cm² in the said perforated wall (22) is between 20 and 30.

15. Apparatus according to any one of Claims 1 to 14, **characterised in that** the number of holes in the said perforated wall is between 800 and 1200.

## Patentansprüche

1. Probeentnahmevorrichtung (1) für die mikrobiologische Analyse von Luft, mit einem Sieb (4) mit einer mit einer Vielzahl von Löchern perforierten Wand (22), Mitteln zum Halten einer entfernbaren Aufnahmeeinrichtung (20), die eine Schicht von Gelwachstumsmedium (21) mit einer ähnlichen Kontur wie die der perforierten Wand (22) in einer vorbestimmten Position aufweist, in der die Schicht von Gelwachstumsmedium (21) gegenüber der perforierten Wand (22) und mit dieser konzentrisch angeordnet ist, sowie Mitteln zum Saugen von Luft am Umfang der in der vorbestimmten Position gehaltenen Aufnahmeeinrichtung (20), um zu bewirken, dass durch die Löcher Luft in die Vorrichtung (1) eintritt, welche auf die Schicht von Gelwachstumsmedium (21) auftrifft, **dadurch gekennzeichnet, dass** die perforierte Wand (22) des Siebs (4) und die Schicht von Gelwachstumsmedium (21) in der Aufnahmeeinrichtung (20) so geformt sind, dass ihr Abstand vom Umfang zum Zentrum zunimmt.

2. Vorrichtung nach Anspruch 1, **dadurch gekennzeichnet, dass** die perforierte Wand (22) des Siebs (4) auf der Seite, die der Schicht von Gelwachstumsmedium (21) zugewandt ist, konkav ist, während letztere auf derjenigen Seite, welche der perforierten Wand (22) des Siebs (4) zugewandt ist, flach ist.

3. Vorrichtung nach einem der Ansprüche 1 oder 2, **dadurch gekennzeichnet, dass** die perforierte Wand (22) des Siebs (4) die Form einer kugelförmigen Kappe aufweist.

4. Vorrichtung nach einem der Ansprüche 1 bis 3, **dadurch gekennzeichnet, dass** die Löcher in der perforierten Wand (22) nur in Kreisen, die konzentrisch sind, angeordnet sind, und bei einer Mehrzahl der Kreise, der Reihe nach vom Zentrum, in mehreren identischen Reihen von im wesentlichen parallelen Keilformen bzw. Fischgrätenformen angeordnet sind, deren Scheitel zum Zentrum hin gewandt ist, wobei jede Reihe von Keilformen bzw. Fischgrätenformen außen durch eine aus zwei Radien (23A - 23F) gebildete Keilform begrenzt ist.

5. Vorrichtung nach Anspruch 4, **dadurch gekennzeichnet, dass** bei jedem Kreis der Mehrzahl der Kreise der n^{te} Kreis vom Zentrum aus sn Löcher aufweist, wobei s die Anzahl identischer Reihen von Keilformen ist.

6. Vorrichtung nach einem der Ansprüche 4 oder 5, **dadurch gekennzeichnet, dass** die Mehrzahl identischer Reihen von Keilformen aus sechs solchen Reihen gebildet ist.

7. Vorrichtung nach einem der Ansprüche 4 bis 6, **dadurch gekennzeichnet, dass** von dem (p+1)^{ten} konsekutiven Kreis vom Zentrum aus jeder Kreis die gleiche Anzahl von Löchern als der p^{te} Kreis aufweist und jedes seiner Löcher auf einem Radius mit einem betreffenden Loch des p^{ten} Kreises ausgerichtet ist, wobei p die Anzahl von Kreisen bei der Mehrzahl aufeinanderfolgender Kreise ist.

8. Vorrichtung nach einem der Ansprüche 4 bis 7, **dadurch gekennzeichnet, dass** die Mehrzahl aufeinanderfolgender Kreise aus vierzehn solchen Kreisen gebildet ist.

9. Vorrichtung nach einem der Ansprüche 4 bis 8, **dadurch gekennzeichnet, dass** die konzentrischen Kreise, an denen die Löcher in der perforierten Wand angeordnet sind, im wesentlichen einen gleichen Abstand aufweisen.

10. Vorrichtung nach einem der Ansprüche 4 bis 9, **dadurch gekennzeichnet, dass** der Abstand zwischen zwei aufeinanderfolgenden Kreisen der konzentrischen Kreise, an denen die Löcher in der perforierten Wand (22) angeordnet sind, zwischen 1,8 und 2,2 mm liegt.

11. Vorrichtung nach einem der Ansprüche 1 bis 10, **dadurch gekennzeichnet, dass** die Löcher in der perforierten Wand (22) des Siebs (4) alle im wesentlichen die gleiche Größe aufweisen.

12. Vorrichtung nach einem der Ansprüche 1 bis 11, **dadurch gekennzeichnet, dass** die Löcher in der perforierten Wand (22) des Siebs (4) alle einen Durchmesser zwischen 0,4 und 0,6 mm aufweisen.

13. Vorrichtung nach einem der Ansprüche 1 bis 12, **dadurch gekennzeichnet, dass** die Anzahl von Löchern pro Oberflächeneinheit der perforierten Wand (22) im wesentlichen gleichmäßig ist.

14. Vorrichtung nach einem der Ansprüche 1 bis 13, **dadurch gekennzeichnet, dass** die Anzahl von Löchern pro cm² in der perforierten Wand (22) zwischen zwanzig und dreißig beträgt.

15. Vorrichtung nach einem der Ansprüche 1 bis 14, **dadurch gekennzeichnet, dass** die Anzahl von Löchern in der perforierten Wand zwischen 800 und 1200 beträgt.

## Revendications

1. Appareil (1) de prélèvement pour l'analyse microbiologique de l'air, comportant un crible (4) présentant une paroi (22) perforée d'une multitude de trous, des moyens pour maintenir un récipient amovible (20) contenant une couche de gélose (21) de contour similaire à celui de ladite paroi perforée (22) dans une position prédéterminée où ladite couche de gélose (21) est disposée en regard de ladite paroi perforée (22) et concentriquement celle-ci, et des moyens d'aspiration d'air en périphérie dudit récipient (20) maintenu dans ladite position prédéterminée, afin de faire pénétrer dans ledit appareil (1), au travers desdits trous, de l'air qui vient frapper ladite couche de gélose (21) ; **caractérisé en ce que** ladite paroi perforée (22) du crible (4) et ladite couche de gélose (21) du récipient (20) sont conformés de sorte que leur écartement augmente de leur périphérie vers leur centre.

2. Appareil selon la revendication 1, **caractérisé en ce que** ladite paroi perforée (22) du crible (4) est concave du côté qui regarde ladite couche de gélose (21) tandis que cette dernière est plate du côté qui regarde la paroi perforée (22) du crible (4).

3. Appareil selon l'une quelconque des revendications 1 ou 2, **caractérisé en ce que** ladite paroi perforée (22) du crible (4) est en forme de calotte sphérique.

4. Appareil selon l'une quelconque des revendications 1 à 3, **caractérisé en ce que** lesdits trous de ladite paroi perforée (22) sont exclusivement disposés selon des cercles concentriques ainsi que, pour une pluralité de dits cercles, consécutifs à partir du centre, selon une pluralité de séries identiques de chevrons sensiblement parallèles dont la pointe est tournée vers le centre, chaque dite série de chevrons étant délimitée extérieurement par un chevron formé par deux rayons (23A-23F).

5. Appareil selon la revendication 4, **caractérisé en ce que** pour chaque cercle de ladite pluralité de cercles, le n-ème cercle à partir du centre présente sn trous, s étant le nombre de séries identiques de chevrons.

6. Appareil selon l'une quelconque des revendications 4 ou 5, **caractérisé en ce que** ladite pluralité de séries identiques de chevrons est formée par six dites séries.

7. Appareil selon l'une quelconque des revendications 4 à 6, **caractérisé en ce que** à partir du (p+1)-ème cercle consécutif à partir du centre, chaque cercle présente le même nombre de trous que le p-ème cercle et chacun de ses trous est aligné, suivant un rayon, avec un trou respectif du p-ème cercle, p étant le nombre de cercles de ladite pluralité de cercles consécutifs.

8. Appareil selon l'une quelconque des revendications 4 à 7, **caractérisé en ce que** ladite pluralité de cercles consécutifs est formée par quatorze dits cercles.

9. Appareil selon l'une quelconque des revendications 4 à 8, **caractérisé en ce que** lesdits cercles concentriques suivant lesquels sont disposés lesdits trous de ladite paroi perforée, sont sensiblement équidistants.

10. Appareil selon l'une quelconque des revendications 4 à 9, **caractérisé en ce que** la distance entre deux cercles consécutifs desdits cercles concentriques suivant lesquels sont disposés lesdits trous de ladite paroi perforée (22), est comprise entre 1,8 et 2,2 mm.

11. Appareil selon l'une quelconque des revendications 1 à 10, **caractérisé en ce que** les trous de ladite paroi perforée (22) du crible (4) ont tous sensiblement la même taille.

12. Appareil selon l'une quelconque des revendications 1 à 11, **caractérisé en ce que** les trous de ladite paroi perforée (22) du crible (4) ont tous un diamètre compris entre 0,4 et 0,6 mm.

13. Appareil selon l'une quelconque des revendications 1 à 12, **caractérisé en ce que** le nombre de trous par unité de surface de ladite paroi perforée (22) est sensiblement uniforme.

14. Appareil selon l'une quelconque des revendications 1 à 13, **caractérisé en ce que** le nombre de trous par cm² de ladite paroi perforée (22), est compris entre 20 et 30.

15. Appareil selon l'une quelconque des revendications 1 à 14, **caractérisé en ce que** le nombre de trous de ladite paroi perforée est compris entre 800 et 1200.
